# EUROPÄISCHE PATENTSCHRIFT

(11) **EP 2 412 989 B1**
(45) Veröffentlichungstag und Bekanntmachung des Hinweises auf die Patenterteilung: **02.10.2013**
(21) Anmeldenummer: 10007799.9
(22) Anmeldetag: 27.07.2010
(51) Int. Cl.: F16B 31/02

(54) **Drehmomentbegrenzungselement für Schrauben**
Torque limiting element for screws
Elément de limitation de couple pour vis

(43) Veröffentlichungstag der Anmeldung: 01.02.2012
(73) Patentinhaber: Siemens Aktiengesellschaft, 80333 München (DE)
(72) Erfinder: Grossmann, Hansjörg, 4625 Oberbuchsiten (CH)

(56) Entgegenhaltungen:
- EP-A1- 0 034 500
- EP-A1- 0 487 851
- EP-A1- 0 623 705
- EP-A2- 0 811 720

## Beschreibung

Die Erfindung betrifft ein Drehmomentbegrenzungselement für Schrauben, insbesondere nach dem Oberbegriff des Anspruchs 1.

Die Schraube ist das meist verwendete Verbindungselement. Wenn die Schraube nicht festgezogen ist, kann sich die Verbindung lösen. Wenn eine Schraube zu fest gezogen ist, kann die Schraube brechen. Es gibt Anwendungsfälle, bei denen eine Schraube genau mit einem vorbestimmten Drehmoment angezogen werden muss. Zu hohe Drehmomente auf Schraubenverbindungen können zur Zerstörung führen. Nur durch die Verwendung von Zusatzwerkzeugen, wie beispielsweise Drehmomentschlüsseln, kann heute sichergestellt werden, dass eine Schraubverbindung mit dem richtigen Drehmoment beaufschlagt ist.

Herkömmliche Schraubensicherungen stehen im Allgemeinen nicht in ausreichendem Maße zur Verfügung. Zum Schutz von Schraubenverbindungen werden diese konstruktiv ausgelegt und mit einem Drehmomentschlüssel angezogen, um die ausgelegten Grenzwerte einzuhalten. Schraubensicherungen werden heute mittels spezifischen Muttern, Scheiben oder Lacken versehen.

Es sind bereits Schrauben bekannt, an deren Schaft ein Schraubenkopf aus Kunststoff angespritzt ist, der bei Erreichen eines maximalen Drehmoments abreißt. Das Anspritzen des Kunststoffschraubenkopfs ist vor allem dann mit erheblichen Werkzeugkosten verbunden, wenn der Schaft der Schraube eine beträchtliche Länge hat, wie dies zum Beispiel bei einer Gewindespindel der Fall ist.

Es ist auch bekannt, auf den einstückig am Gewindeschaft angeformten Schraubenkopf eine Sollbruchkappe aus Kunststoff aufzusetzen, die nur ein vorgegebenes maximales Drehmoment auf die Schraube aufbringen kann. Da aber die Festigung des Kunststoffes Schwankungen unterworfen ist, lässt sich hierdurch nicht das gewünschte maximale Drehmoment mit der erforderlichen Genauigkeit vorgeben. Außerdem kann die Kunststoffkappe, die auf den Schraubenkopf aufgesetzt ist, beim Aufbringen des Drehmoments vom Schraubenkopf abspringen und dabei unbrauchbar werden.

Schrauben-Mutter-Verbindungen werden in aller Regel eingesetzt, um zwischen Schraubenkopf und Mutter empfindliche Bauteile mit einer Klemmkraft zu beaufschlagen, so dass diese in ihrer Lage fixiert werden. Dabei besteht häufig der Bedarf, die über die Schraube beziehungsweise die Mutter aufbringbare Klemmkraft zu begrenzen, um entweder die zulässigen Zuspannungen im Schraubenschaft nicht zu überschreiten, oder um die auf die Bauteile einwirkende Klemmkraft auf Grund der zulässigen Materialspannungen der Bauteile zu begrenzen. Da in aller Regel ein linearer Zusammenhang zwischen diesen Klemmkräften und den Drehmomenten besteht, welche auf die Schrauben-Mutter-Verbindung aufgebracht werden, wird normalerweise das Drehmoment als Richtgröße verwendet, anhand dessen ein Rückschluss auf die aufgebrachte Klemmkraft gezogen werden kann.

Um eine definierte Klemmkraft auf einer Schrauben-Mutter-Verbindung aufbringen zu können, werden daher häufig Drehmomentschlüssel verwendet, mit welchen sich ein vorbestimmbares Drehmoment und somit eine bestimmte Klemmkraft auf die Schrauben-Mutter-Verbindung aufbringen lässt. Derartige Drehmomentschlüssel weisen häufig eine sehr aufwändige Einstellmechanik auf, mit welcher sich das mit dem Drehmomentschlüssel aufbringbare Drehmoment einstellen lässt, und bei dessen Überschreitung der Drehmomentschlüssel entweder ein hörbares Geräusch erzeugt oder von selbst ausrastet, also leer läuft.

Zwar lässt sich mit derartigen Drehmomentschlüsseln ein vorbestimmbares Drehmoment auf eine Schrauben-Mutter-Verbindung aufbringen, jedoch sind diese Drehmomentschlüssel sehr groß, schwer und daher auch verhältnismäßig unhandlich zu bedienen, so dass sich diese in vielerlei Hinsicht als mit Nachteilen behaftet erweisen.

Insbesondere wenn eine Vielzahl von Schrauben-Mutter-Verbindungen mit solch einem Drehmomentschlüssel angezogen werden sollen, erweist sich die Handhabung derartig großer und schwerer Drehmomentschlüssel in ergonomischer Hinsicht als unbefriedigend. Außerdem sind die Schrauben-Mutter-Verbindungen häufig nur schlecht zugänglich, so dass sie mit solch einem unhandlichen Drehmomentschlüssel nicht oder nur kaum zugänglich sind.

Die gattungsgemäße EP 0 811 720 A2 offenbart eine Befestigungsvorrichtung für Bahngleise, die als Drehmomentbegrenzungselement für Schrauben in Form einer Feder ausgebildet ist.

Demgemäß besteht die Aufgabe der vorliegenden Erfindung darin, das Drehmoment einer Schraube zu begrenzen, ohne dabei auf Zusatzwerkzeug angewiesen zu sein.

Diese Aufgabe wird durch ein Drehmomentbegrenzungselement mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Drehmomentbegrenzungselement für eine Schraube gelöst, welche sich dadurch auszeichnet, dass das Begrenzungselement als Feder ausgebildet ist. Die wichtigste Funktion der erfindungsgemäßen Feder besteht in der Sicherstellung eines definierten Drehmomentes. Dadurch kann die Schraube nicht überdreht werden. Ein zusätzliches Werkzeug, wie beispielsweise ein Drehmomentschlüssel, ist nicht mehr erforderlich. Die erfindungsgemäße Feder hat die Form des griechischen Buchstabens Ω.

Die Wirkungsweise dieser Feder besteht darin, dass dieses Teil vor dem Montieren der Schraube in eine Aussparung eingeführt wird und nach dem Einführen der Schraube an deren Flankenwinkeln anliegt. Beim Auftreffen der Schraube auf einen Widerstand, zum Beispiel dem Befestigungspanel, wird die Kraft über die Flankenwinkel der Schraube auf dieses Teil abgelenkt und ist somit aufgebogen und verformt. Beim Erreichen eines bestimmten Drehmoments, welches durch die Gewindeform, die Drahtform oder den Drahtdurchmesser, die Form der Aufnahmeöffnung und der entsprechenden Materialauswahl bestimmt werden kann, schnappt dieses Teil in den nächsten Gewindegang der Schraube über. Dies kann durch die Auswahl einer geeigneten Materialpaarung x-mal wiederholt werden. Um beim Überschnappen in den nächsten Gewindegang ein zu großes Lösen der Schraube zu vermeiden, können mehrere Einzelteile oder auch zusammenhängende Formteile übereinander gewindesteigungsversetzt angeordnet werden. Dies ist vom gewählten Gewindedurchmesser und der Gewindesteigung abhängig. Dadurch ist ein kontinuierliches Anziehen der Schraube bis zum gewünschten Drehmoment möglich, ohne dass ein Überschnappungseffekt fühlbar ist. Die Wiederholbarkeit und Lösbarkeit der Verbindung ist gewährleistet.

Die Erfindung kann auch in einer Mutter angewendet werden. In diesem Fall stellt die Sicherung und Drehmomentbegrenzung ein Ersatz des Gewindes dar. Es ist von Vorteil, wenn Normalteilschrauben verwendet werden, welche aber eine große Toleranz in der Fertigung aufweisen und somit zu einer großen Toleranz beim Drehmoment führen. Bisher ist die Verwendung von Sonderschrauben mit enger Fertigungstoleranz zu empfehlen.

Erfindungsgemäß ist vorgesehen, dass die Feder eine Q-Form als Grundkörper aufweist. Diese Ω-Form der erfindungsgemäßen Feder ermöglicht es, dass der Schaft der Schraube vom Drehmomentbegrenzungselement fest umschlungen ist und so eine Drehmomentbegrenzung bewerkstelligen kann.

Erfindungsgemäß ist ebenfalls vorgesehen, dass zwei parallel übereinander angeordnete Grundkörper in Ω-Form angeordnet sind, wobei diese beiden Grundkörper über eine U-förmige Brücke miteinander verbunden sind und ein zusammenhängendes Formteil ausbilden. Eine derartige Ausführungsform ermöglicht es, dass zwei Grundkörper in Q-Form den Schaft der Schraube umschließen. Die U-förmige Brücke und die Endteile der Ω-förmigen Grundkörper ermöglichen dabei eine Platzierung der Feder in der konstruktiven Umgebung, die als Gehäuse oder Ähnliches ausgebildet sein kann.

Konstruktiv ist in vorteilhafter Weise ebenfalls vorgesehen, dass eine Mehrzahl von Ω-Federn übereinander gewindesteigungsversetzt angeordnet ist. Um beim Überschnappen in den nächsten Gewindegang ein zu großes Lösen der Schraube zu vermeiden, können mehrere Einzelteile oder auch zusammenhängende Formteile übereinander gewindesteigungsversetzt angeordnet werden. Dies ist vom gewählten Gewindedurchmesser und der Gewindesteigung abhängig. Dadurch ist ein kontinuierliches Anziehen der Schraube bis zu einem bestimmten Drehmoment möglich, ohne dass ein Überschnappungseffekt fühlbar ist.

In einer besonders vorteilhaften Ausführungsform ist vorgesehen, dass die erfindungsgemäße Feder aus Metall gefertigt ist. Zur Anwendung kommt hier vorzugsweise Federstahldraht. Dieses Material ermöglicht eine sichere Drehmomentbegrenzung der Schraube.

In einer anderen vorteilhaften Ausführungsform ist vorgesehen, dass die erfindungsgemäße Feder aus Kunststoff gefertigt ist. Die aus Kunststoff gefertigte Feder kommt bei Kunststoffschrauben zum Einsatz. Die Kombination aus Kunststoffschrauben und einer aus Kunststoff gefertigten Feder hat sich ebenfalls als vorteilhaft erwiesen, um eine Drehmomentbegrenzung zu erreichen.

Neben der Drehmomentbegrenzung ist die erfindungsgemäße Feder zudem auch als Verliersicherung ausgebildet.

Die erfindungsgemäße Ω-Feder benötigt extrem wenig Platz innerhalb der Konstruktion. Eine andere und damit die wichtigste Funktion dieser Feder ist die Sicherstellung eines definierten Drehmoments, wodurch die Schraube nicht überdreht werden kann. Ein zusätzliches Werkzeug, wie beispielsweise ein Drehmomentschlüssel, ist nun nicht mehr erforderlich. Zudem dient die Feder auch als Verliersicherung.

Weitere Vorteile und Ausführungen der Erfindung werden nachfolgend anhand von Ausführungsbeispielen sowie anhand der Zeichnung erläutert.

Dabei zeigen schematisch:
Fig. 1 in einer perspektivischen Darstellung eine Feder in Ω-Form als Einzelteil;
Fig. 2 in einer perspektivischen Darstellung eine erfindungsgemäße Feder mit zwei Grundkörpern in Q-Form; Fig. 3 in einer perspektivischen Darstellung die Feder aus Fig. 2 an einem Schraubenschaft angeordnet;
Fig. 4 in einer perspektivischen Darstellung die Feder aus Fig. 2 in einer konstruktiven Umgebung.

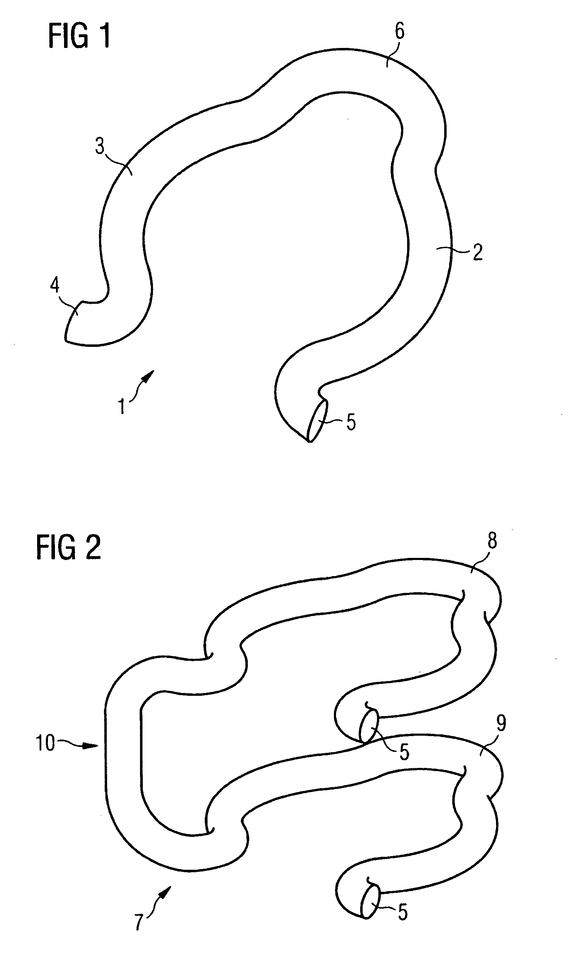

Fig. 1 zeigt eine Feder 1 in Ω-Form als Einzelteil. Die Feder 1 weist zwei vorzugsweise halbkonzentrisch ausgeformte Seitenschenkel 2, 3 auf, die sich gegenüberliegen und jeweils in zwei nach außen abgewinkelte Endabschnitte 4, 5 münden. Die Seitenschenkel 2, 3, sind über eine U-förmige Brücke 6 miteinander verbunden.

In Fig. 2 ist eine
erfindungsgemäße Feder 7 mit zwei Grundkörpern in Ω-Form dargestellt. Die in Fig. 2 dargestellte Feder 7 weist zwei Grundkörper 8, 9 auf, die jeweils in der Form der Feder 1 entsprechen. Die Grundkörper 8, 9 sind übereinander angeordnet und über eine U-förmige Brücke 10 miteinander verbunden.

Die Grundkörper 8, 9 münden jeweils an der offenen Seite in die Endabschnitte 5.

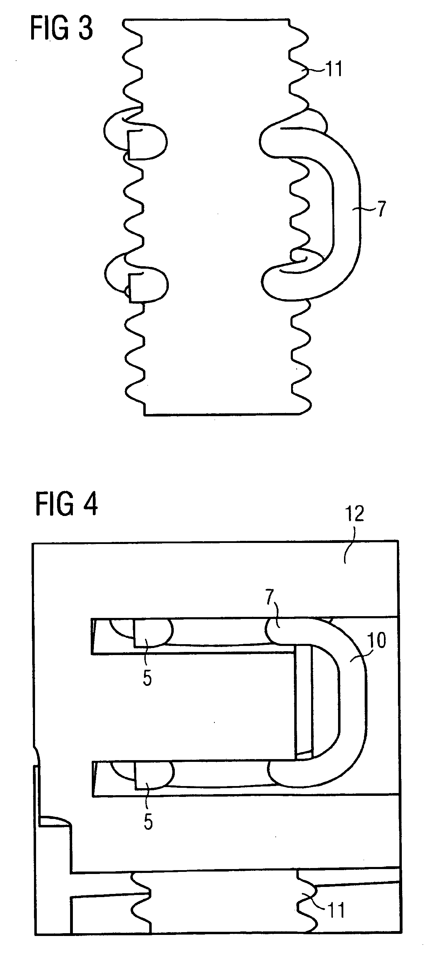

Fig. 3 zeigt die erfindungsgemäße Feder 7, wenn sie an einem Schraubenschaft 11 angeordnet ist.

Fig. 4 zeigt die Feder 7 in einer konstruktiven Umgebung 12 und angeordnet an einem Schraubenschaft 11. Aus dieser Anwendung ist ersichtlich, dass die freien Endabschnitte 5 sowie die U-förmige Brücke 10 als Klemmbereiche dienen, die sich in der konstruktiven Umgebung 12 verkeilen.

Die erfindungsgemäße Ω-Feder benötigt extrem wenig Platz innerhalb der Konstruktion. Eine andere und damit die wichtigste Funktion dieser Feder ist die Sicherstellung eines definierten Drehmoments, wodurch die Schraube nicht überdreht werden kann. Ein zusätzliches Werkzeug, wie beispielsweise ein Drehmomentschlüssel, ist nun nicht mehr erforderlich. Zudem dient die Feder auch als Verliersicherung.

## Patentansprüche

1. Drehmomentbegrenzungselement für Schrauben, wobei das Begrenzungselement als Feder (7) ausgebildet ist, **dadurch gekennzeichnet, dass** die Feder (7) zwei parallel übereinander angeordnete Grundkörper (8,9) in Ω-Form aufweist, wobei die zwei Grundkörper (8,9) in Q-Form über eine U-förmige Brücke (10) miteinander verbunden sind und ein zusammenhängendes Formteil ausbilden und die Grundkörper (8,9) jeweils an der offenen Seite in Endabschnitte (5) münden und wobei die freien Endabschnitte (5) sowie die U-förmige Brücke (10) als Klemmbereiche dienen, die sich in der konstruktiven Umgebung verkeilen.

2. Drehmomentbegrenzungselement nach Anspruch 1, **dadurch gekennzeichnet, dass** eine Mehrzahl von Q-Federn (7) übereinander gewindesteigungsversetzt angeordnet sind.

3. Drehmomentbegrenzungselement nach Anspruch 1 oder 2, **dadurch gekennzeichnet, dass** die Feder (,7) aus Metall gefertigt ist.

4. Drehmomentbegrenzungselement nach Anspruch 1 oder 2, **dadurch gekennzeichnet, dass** die Feder (7) aus Kunststoff gefertigt ist.

5. Drehmomentbegrenzungselement nach einem der vorhergehenden Ansprüche, **dadurch gekennzeichnet, dass** das Begrenzungselement als Verliersicherung ausgebildet ist.

## Claims

1. Torque-limiting element for screws, wherein the limiting element is designed as a spring (7), **characterised in that** the spring (7) has two main bodies (8,9) arranged parallel one over the other in an Q shape, wherein the two main bodies (8,9) are connected to one another in an Q shape via a U-shaped bridge (10) and form a continuous moulded part and the main bodies (8,9) each lead into end sections (5) at the open side and wherein the free end sections (5) and the U-shaped bridge (10) serve as terminal areas that wedge together in the design environment.

2. Torque-limiting element according to claim 1, **characterised in that** a plurality of Q springs (7) are arranged one over the other with offset pitches.

3. Torque-limiting element according to claim 1 or 2, **characterised in that** the spring (7) is manufactured from metal.

4. Torque-limiting element according to claim 1 or 2, **characterised in that** the spring (7) is manufactured from plastic.

5. Torque-limiting element according to one of the preceding claims, **characterised in that** the limiting element is designed as a retainer.

## Revendications

1. Elément de limitation de couple pour vis, l'élément de délimitation étant réalisé comme ressort (7), **caractérisé en ce que** le ressort (7) présente deux corps de base (8, 9) disposés parallèlement l'un sur l'autre en forme de Q, les deux corps de base (8, 9) en forme de Ω étant reliés entre eux par l'intermédiaire d'un pont (10) en forme de U et formant une pièce moulée cohérente et les corps de base (8, 9) aboutissant en sections terminales (5) respectivement sur le côté ouvert et les sections terminales libres (5) ainsi que le pont (10) en forme de U servant de zones de serrage qui se calent dans la construction environnante.

2. Elément de limitation de couple selon la revendication 1, **caractérisé en ce qu'**une pluralité de ressorts Ω (7) sont disposés en étant décalés l'un par rapport à l'autre au regard du pas du filet.

3. Elément de limitation de couple selon la revendication 1 ou 2, **caractérisé en ce que** le ressort (7) est fabriqué en métal.

4. Elément de limitation de couple selon la revendication 1 ou 2, **caractérisé en ce que** le ressort (7) est fabriqué en matière plastique.

5. Elément de limitation de couple selon l'une quelconque des revendications précédentes, **caractérisé en ce que** l'élément de limitation de couple est réalisé comme arrêt de vis.
